# EUROPÄISCHE PATENTSCHRIFT

(11) **EP 0 400 447 B1**
(45) Veröffentlichungstag und Bekanntmachung des Hinweises auf die Patenterteilung: **04.08.1993**
(21) Anmeldenummer: 90109628.9
(22) Anmeldetag: 21.05.1990
(51) Int. Cl.: B27K 3/14

(54) **Anordnung zum Schutz von Holzmasten**
Device for protecting wooden masts
Dispositif pour la protection des mâts en bois

(30) Priorität: 02.06.1989 DE 3918069
(43) Veröffentlichungstag der Anmeldung: 05.12.1990
(73) Patentinhaber: kabelmetal electro GmbH, 30002 Hannover (DE)
(72) Erfinder: Marx, Karl-Heinz, D-3008 Garbsen 9 (DE); Grajewski, Franz, Dr.-Ing., D-3060 Stadthagen (DE)

(56) Entgegenhaltungen:
- AU-A- 517 086
- DE-A- 1 492 565
- DE-A- 2 043 489
- DE-B- 1 089 537

## Beschreibung

Die Erfindung betrifft eine Anordnung zum Schutz von Holzmasten im Bereich der Bodengleiche, bestehend aus einem den zu schützenden Bereich umhüllenden Kunststoffband, welches an seinen Längskanten eine Beschichtung und zwischen den Beschichtungen eine Schicht aus Holzschutzmittel aufweist und dessen Querkanten in einem Überlappungsbereich miteinander verbunden sind.

Holzmasten für den Einsatz als Träger von Überlandleitungen und Telefonleitungen ebenso wie Zaunpfähle werden meist im druckimprägnierten Zustand eingesetzt, d.h. ein Holzschutzmittel wird unter Druck in das Holz eingepreßt. Die Schwachstelle von im Erdreich verankerten Masten oder Pfählen ist der Übergangsbereich zwischen Erdreich und Atmosphäre, wo Fäulnisbakterien, Pilze etc. das Holz angreifen. Während die durchschnittliche Lebensdauer der unterhalb und oberhalb des gefährdeten Bereiches gelegenen Bereiche mehrere Dekaden betragen kann, hat der Übergangsbereich je nach Bodenbeschaffenheit nur eine Lebensdauer von 5 bis 10 Jahren.

Man hat schon versucht, den Übergangsbereich nachzubehandeln, und zwar mit Stoffen, die Bor enthalten. Es wird vermutet, daß Bor oder Borverbindungen als Fungizide wirken.

Die Behandlung des Übergangsbereichs mit flüssigen Mitteln scheiterte daran, daß das Auftragen der Flüssigkeit wegen der geringen Viskosität der Flüssigkeit nahezu unmöglich war.

Man hat auch schon versucht, die Pfähle oder Masten anzubohren und in die Bohrungen Stäbe einzubringen, die Bor enthalten. Durch einen langanhaltenden Diffusionsprozeß dringt der Werkstoff in das Holz in der Nähe der Bohrung ein und verhindert die Fäulnisbildung. Nachteilig bei dieser Vorgehensweise ist, daß der Pfahl oder Mast gerade im gefährdeten Bereich durch die Bohrungen geschwächt wird.

Andere Versuche, die sehr wirksamen Bor enthaltenden Imprägniermittel im Freien anzuwenden, scheiterten daran, daß das Mittel von Regen, Schnee, Spritzwasser etc. ausgewaschen wurde, bevor es wirksam wurde.

Aus der DE-A 14 92 565 ist eine Holzimprägniermanschette bekannt, welche aus einer wasserundurchlässigen Kunststoffolie und einer von ihr getragenen Imprägniermittelpaste besteht und deren freie Ränder mit einem selbstklebenden Klebstreifen mit dehnungsfester Unterlage versehen sind. Die Klebstreifen befinden sich auf der nach außen weisende Oberfläche der Kunststoffolie und ragen über die Ränder der Kunststoffolie hinaus. Die Kunststoffolie wird unter Zugspannung um den zu schützenden Mast herumgezogen, wobei die dehnungsfesten Klebstreifen eine Dehnung der Randbereiche verhindern und für einen dichten Sitz der Bandage sowohl am oberen als auch am unteren Rand sowie im Bereich der senkrechten Überlappungsnaht sorgen. Da die Bandage im gefalteten Zustand transportiert wird, ist die Klebkraft der Klebstreifen begrenzt. Sie könne nicht verhindern, daß am Mast herabströmendes Wasser durch Spalte im Mast in den Bereich der Bandage gelangen kann. Da auch die Klebkraft im Bereich der Überlappung gering ist, kann auch nur eine geringe Zugspannung aufrechterhalten werden.

Aus der DE-A 20 43 489 ist eine flüssigkeitsdichte Umhüllung für imprägnierte Holzmasten zwecks Abdeckung einer im Übergangsbereich angebrachten Schutzsalzschicht bekannt, welche die Schutzsalzschicht vor der Auslaugung durch die Erdfeuchte und herabfließendes Regenwasser schützen soll. Da eine einwandfreie Abdichtung nicht ohne weiteres zu erzielen ist, wird oberhalb der Umhüllung ein Tränkbehälter vorgesehen, der langfristig selbsttätig Tränkmittel abgibt. Als Umhüllung wird ein Schrumpfschlauch vorgeschlagen, der über den Mast gezogen und auf den Übergangsbereich geschrumpft wird. Vor dem Schrumpfen wird eine wärmebeständige Abdichtmasse zur Ausfüllung von Unebenheiten und Holzrissen am fußseitigen Ende auf den Mast aufgebracht. Das obere Ende des Schrumpfschlauches umschließt den Tränkbehälter. Zwischen dem Schrumpfschlauch und dem Holzmast befindet sich eine mit der Schutzsalzschicht bzw. einer Schutzsalzpaste getränkte Bandage, die laufend über ein Schlauchstück von dem Tränkbehälter nachgespeist wird. Diese bekannte Anordnung ist sehr arbeitsintensiv auf der Baustelle. Da das kopfseitige Ende der Umhüllung nur schwer abgedichtet werden kann, wird bei starken Regenfällen das Tränkmittel verdünnt und herausgespült. Die Tränkbehälter sind an der Mastoberfläche hervorspringend befestigt und sind deshalb gegen eine mechanische Beschädigung anfällig. An Straßen können die hervorspringenden Tränkbehälter zu Verletzungen führen.

Die AU-A 51 70 86 offenbart eine Bandage, die für die Anwendung flüssiger Holzschutzmittel geeignet ist. Die Bandage besteht aus einem Kunststoffband, welches mit einer Polyurethanschaumstoffschicht verbunden ist. Die Schaumstoffschicht besteht aus einzelnen Blöcken, die durch einen gummiartigen Kleber voneinander getrennt sind. Die Schaumstoffblöcke sind mit dem flüssigen Holzschutzmittel getränkt. Die Bandage wird um den zu schützenden Bereich herumgelegt und an den Holzmast oben und unten angenagelt bzw. mit Bändern befestigt. Nach einer Alternative kann das Kunststoffband wärmeschrumpfbar sein, so daß die Bandage auf den Holzmast aufgeschrumpt werden kann. Die oben und unten überstehenden Bereiche des Kunststoffbandes schrumpfen auf den Holzmast und sollen diesen abdichten, was jedoch bei einer rauhen Oberfläche des Holzmastes nicht möglich ist.

Der vorliegenden Erfindung liegt von daher die Aufgabe zugrunde, die bekannte Anordnung dahingehend zu verbessern, daß der Arbeitsaufwand an der Montagestelle stark verringert wird, daß ein Auswaschen der Imprägniermittel durch Regenwasser, Spritzwasser und Grundwasser vermieden wird und dadurch die Wirkdauer der Imprägniermittel verlängert wird. Die Anordnung soll auch an Masten von großer Länge nach der Verankerung im Erdreich anbringbar sein.

Diese Aufgabe wird durch die Kombination folgender Merkmale gelöst:
a) das Kunststoffband ist auf dem Bereich der Bodengleiche aufgeschrumpft
b) die an den Längskanten befindlichen Beschichtungen bestehen aus einer dauerplastischen Dichtmasse
c) das Holzschutzmittel ist eine an dem Kunststoffband festhaftende Paste, welche als Wirkstoff Bor oder eine Borverbindung enthält.
d) der Überlappungsbereich ist mit einem Klebestreifen überdeckt.

Durch die erfindungsgemäßen Maßnahmen kann nachträglich an bereits installierten Masten oder Pfählen eine manschettenartige Umhüllung angebracht werden, wobei Vorarbeiten entbehrlich sind. Das Kunststoffband enthält alle erforderlichen Mittel. Die Dichtstreifen werden beim Erwärmen des Kunststoffbandes zum Zwecke des Schrumpfens plastisch und dringen in die rauhe Oberfläche des Mastes ein und schaffen damit zwei voneinander beabstandete Dichtringstreifen. Damit ist das Imprägniermittel gegen Auswaschung geschützt. Das Imprägniermittel ist eine Paste, welche als Wirkstoff Bor oder eine Borverbindung enthält. Es hat sich gezeigt, daß bereits geringe Mengen von Bor ausreichen, einen Fäulnisprozeß zu verhindern. Durch die im Holz befindliche Feuchtigkeit wird das Bor bzw. die Borverbindung aus der Paste gelöst und verteilt sich durch Diffusion gleichmäßig über den Querschnitt des Mastes.

Damit die beim Schrumpfen auftretenden Kräfte aufgefangen werden können und das Kunststoffband als Ring auf den Mast aufschrumpfen zu können, ist das Kunststoffband mit Überlappung herumgelegt, d.h. das Ende des Kunststoffbandes liegt auf dem Anfang des Kunststoffbandes auf. Festgelegt werden die Enden durch einen Klebestreifen, dessen Länge mindestens so groß wie die Breite des Kunststoffbandes sein sollte. Der Klebestreifen ist mit einem Heißschmelzkleber beschichtet und wird vor dem Schrumpferwärmen auf dem Anfang und dem Ende des Kunststoffbandes durch Anwendung von Druck und Wärme befestigt. Nach dem Erkalten des Heißschmelzklebers werden die restlichen Bereiche des Kunststoffstreifens geschrumpft. Die Paste, die bei niedriger Temperatur und/oder im ausgetrockneten Zustand hart und brüchig werden kann, kann vor dem Herumlegen um den Mast angefeuchtet oder vorsichtig erwärmt werden, um sie plastisch zu machen.

Nach einer besonders vorteilhaften Ausgestaltung der Erfindung ist die Breite des Kunststoffbandes mindestens 250 mm und macht die Breite der pastenartigen Schicht mindestens die Hälfte der Breite des Bandes aus.

Da sich bei Anwesenheit von Feuchtigkeit das Bor oder die Borverbindung auch in Längsrichtung des Mastes diffusionsartig verteilt, reicht in den meisten Anwendungsfällen eine Bandbreite von 250 mm aus.

Die Erfindung betrifft weiterhin ein Verfahren zum Schützen von Holzmasten im Übergangsbereich vom Erdreich zur Atmosphäre mittels eines schrumpfenden Kunststoffteils und einer Schutzpaste.

Das erfindungsgemäße Verfahren ist dadurch gekennzeichnet, daß der Übergangsbereich mit einem Kunststoffband bedeckt wird, welches an seinen Längskanten eine Beschichtung aus einer Dichtmasse und zwischen den Längskantenbereichen eine Beschichtung aus einer Bor oder eine Borverbindung enthaltenden Paste aufweist,daß die Bandenden überlappend gelegt werden, daß die überlappenden Bandenden durch einen Klebestreifen verbunden werden und daß das Kunststoffband durch Wärmeeinwirkung auf den Holzmast geschrumpft wird.

Bei dem Verfahren gemäß der Lehre der Erfindung kann von einer Vorratsspule die für die Umhüllung erforderliche Länge des Kunststoffbandes abgenommen werden und ohne weitere vorbereitenden Maßnahmen um die zu schützende Stelle herumgelegt mit dem Klebestreifen festgelegt und abschließend geschrumpft werden, wobei sich beim Schrumpfen die Dichtmasse in gegebenenfalls vorhandene Hohlräume einpreßt und zwei von einander beabstandete Dichtringe bildet. Auch die Paste wird durch die Wärmebehandlung beim Schrumpfen plastisch, so daß die pastöse Schicht sich ebenfalls hohlraumfrei an den Holzmast anlegt.

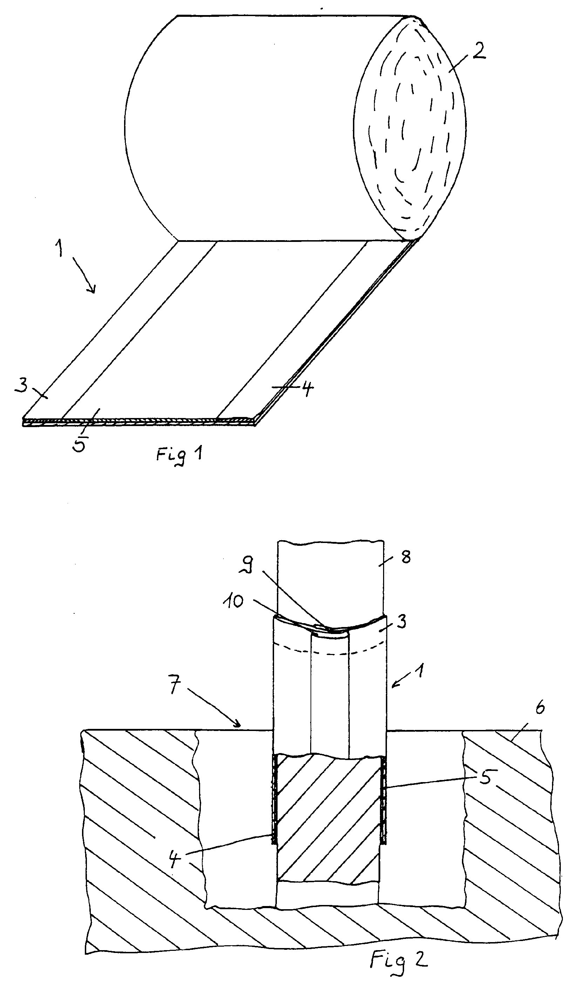

Die Erfindung ist anhand der in den Figuren 1 und 2 schematisch dargestellten Ausführungsbeispiele näher erläutert.

In der Figur 1 ist ein Ausführungsbeispiel eines im Rahmen der Erfindung verwendeten Kunststoffbandes 1 perspektivisch dargestellt, welches zu einem Vorratswickel 2 aufwickelbar ist. Das Kunststoffband 1 besteht vorteilhafterweise aus einem vernetzten Polyethylen, und ist nach dem Vernetzen auf eine Temperatur oberhalb des Kristallitschmelzpunktes erwärmt, bei dieser Temperatur um mindestens ca. 25 % gereckt und im gereckten Zustand abgekühlt worden. Solche schrumpfenden Bänder sind auf dem Markt erhältlich.

Das Kunststoffband 1, das z.B. eine Wanddicke von ca. 1 - 2 mm aufweist, zeigt an seinen Längskantenbereichen je einen Streifen 3 und 4 aus eine dauerplastischen Dichtmasse auf der Basis von Polyisobutylen.

Die Breite der Streifen 3 und 4 beträgt zweckmäßigerweise höchstens 25 % der Breite des Kunststoffbandes 1. Zwischen den Streifen 3 und 4 befindet sich eine Schicht 5 aus einer Bor oder eine Borverbindung enthaltende Paste, welche auf dem Kunststoffband fest haftet. Sowohl die Streifen 3 und 4 als auch die Schicht 5 werden vorteilhafterweise in einen kontinuierlichen Prozeß auf das unbeschichtete Kunststoffband 1 aufgetragen. Die Streifen 3 und 4 können dabei aus einer Vielzahl von in Längsrichtung verlaufenden nicht dargestellter nebeneinander verlaufender Einzelstreifen aufgebaut sein.

Das Kunststoffband 1 ist in hervorragender Weise geeignet, den Übergangsbereich 7 zwischen dem Erdreich 6 und der Atmosphäre von Holzmnasten 8, Weidezaunpfählen etc. vor vorzeitiger Fäulnis zu schützen. Hierzu wird von dem Wickel 2 eine Länge abgetrennt, die etwas größer ist als der Umfang des Holzmastes 8. Das Band 1 wird um den Holzmast 8 mit überlappenden Bandkanten 9 herumgelegt und der überlappende Bandkantenbereich 9 mit einem Klebestreifen 10, der ein Kunststoffstreifen mit einer Beschichtung aus Heißschmelzkleber ist, festgelegt. Hierzu wird der Bereich 9 und der Streifen 10 erhitzt und der Streifen 10 angedrückt. Anschließend werden die restlichen Bereiche der aus dem Kunststoffband 1 gebildeten Umhüllung erwärmt und auf den Holzmast geschrumpft. Dabei sollten insbesondere nach dem Schrumpfen die Dichtmassestreifen 3 und 4 erwärmt werden, damit die Dichtmasse etwa vorhandene Hohlräume vollständig ausfüllt und die Gefahr des Eindringens von Feuchtigkeit zwischen dem Kunststoffband 1 und dem Holzmast 8 unterbunden ist. Das in der Beschichtung 5 vorliegende Bor bzw. die Borverbindung ist wasserlöslich, so daß eine Restfeuchte im Holzmast 8 in der Regel ausreicht, genügend Bor-Ionen aus der Paste feizusetzen, die sich durch Diffusion über den Querschnitt des Holzmastes 8 verteilen, und das Holz vor Fäulnis schützen.

Neben dem Schutz vor Feuchtigkeit dient das Kunststoffband 1 bzw. die daraus hergestellte Umhüllung auch dem mechanischen Schutz.

## Patentansprüche

1. Anordnung zum Schutz von Holzmasten (8) im Bereich der Bodengleiche, bestehend aus einem den zu schützenden Bereich umhüllenden Kunststoffband (1), welches an seinen Längskanten eine Beschichtung (3,4) und zwischen den Beschichtungen (3,4) eine Schicht (5) aus Holzschutzmittel aufweist und dessen Querkanten in einem Überlappungsbereich (9) miteinander verbunden sind gekennzeichnet durch folgende Merkmale
a) das Kunststoffband (1) ist auf den Bereich der Bodengleiche aufgeschrumpft
b) die an den Längskanten befindlichen Beschichtungen (3,4) bestehen aus einer dauerplastischen Dichtmasse
c) das Holzschutzmittel ist eine an dem Kunststoffband (1) festhaftende Paste (5), welche als Wirkstoff Bor oder eine Borverbindung enthält
d) der Überlappungsbereich (9) ist mit einem Klebestreifen (10) überdeckt.

2. Anordnung nach Anspruch 1, dadurch gekennzeichnet, daß die Breite des Bandes (1) mindestens 250 mm beträgt und daß die Breite der pastenartigen Schicht (5) mindestens die Hälfte der Breite des Bandes (1) ausmacht.

3. Verwahren zum Schützen von Holzmasten im Übergangsbereich vom Erdreich zur Atmosphäre mittels eines schrumpfenden Kunststoffteils und einer Schutzpaste, dadurch gekennzeichnet, daß der Übergangsbereich mit einem Kunststoffband bedeckt wird, welches an seinen Längskantenbereichen eine Beschichtung aus einer Dichtmasse und zwischen den Längkantenbereichen eine Beschichtung aus einer Bor oder eine Borverbindung enthaltende Paste aufweist, daß die Bandenden überlappend übereinandergelgt werden, daß die überlappenden Bandenden durch einen Klebestreifen verbunden werden und daß das Kunststoffband durch Wärmeeinwirkung auf den Holzmast geschrumpft wird.

## Claims

1. Arrangement for the protection of wooden poles (8) in the region of ground level, consisting of a plastic tape (1) which wraps the region to be protected and has at its longitudinal edges a coating (3, 4) and between the coatings (3, 4) a layer (5) of wood preservative and the transverse edges of which are joined together in an overlapping region (9), characterised by the following features
a) the plastic tape (1) is shrunk on in the region of ground level
b) the coatings (3, 4) on the longitudinal edges consist of a permanently plastic sealing compound
c) the wood preservative is a paste (5) which adheres to the plastic tape (1) and contains boron or a boron compound as active substance
d) the overlapping region (9) is covered with an adhesive strip (10).

2. Arrangement according to Claim 1, characterised in that the width of the tape (1) is at least 250 mm and in that the width of the paste-like layer (5) amounts to at least half the width of the tape (1).

3. Method of protecting wooden poles in the transition region from the soil to the atmosphere by means of a shrinking plastic part and a protective paste, characterised in that the transition region is covered with a plastic tape which has at its longitudinal edge regions a coating of a sealing compound and between the longitudinal edge regions a coating of a paste containing boron or a boron compound, in that the tape ends are laid on one another in an overlapping manner, in that the overlapping tape ends are joined by an adhesive strip and in that the plastic tape is shrunk onto the wooden pole by the effect of heat.

## Revendications

1. Dispositif de protection de poteaux en bois (8) dans la zone du niveau du sol, constitué d'une bande de plastique (1) qui enveloppe la zone à protéger, qui présente, sur ses bords longitudinaux, une enduction (3,4) et, entre les enductions (3,4), une couche (5) d'un produit de préservation du bois et dont les bords transversaux sont réunis l'un à l'autre dans une zone de recouvrement (9)
dispositif caractérisé par les attributs suivants
a) la bande plastique se rétracte sur la zone du niveau du sol;
b) les enductions (3,4) qui se trouvent sur les bords longitudinaux sont constituées d'une masse d'étanchéité à plasticité permanente;
c) le produit de préservation du bois est une pâte (5) qui adhère fortement à la bande plastique (1) et contient comme agent du bore ou une liaison du bore;
d) la zone de recouvrement (9) est elle-même recouverte d'un ruban collant (10).

2. Dispositif selon la revendication 1, caractérisé par le fait que la largeur de la bande (1) vaut au moins 250 mm et que la largeur de la couche pâteuse (5) vaut au moins la moitié de la largeur de la bande (1).

3. Procédé de protection de poteaux en bois dans la zone de transition ente le sol et l'atmosphère au moyen d'une pièce plastique rétractable et d'une pâte de protection, caractérisé par le fait que l'on recouvre la zone de transition avec une bande plastique qui présente sur ses zones de bordure longitudinale une enduction constituée d'une masse d'étanchéité et, entre les zones de bordure longitudinale, une enduction constituée d'une pâte contenant du bore ou une liaison du bore, par le fait que l'on pose les extrémités de la bande à recouvrement l'une au-dessus de l'autre, par le fait que l'on réunit au moyen d'un ruban collant les extrémités de la bande qui se recouvrent et par le fait que l'on fait se rétracter la bande plastique sur le poteau en bois sous l'action de la chaleur.
